# EUROPEAN PATENT SPECIFICATION

(11) **EP 2 637 235 B1**
(45) Date of publication and mention of the grant of the patent: **28.03.2018**
(21) Application number: 13155810.8
(22) Date of filing: 19.02.2013
(51) Int. Cl.: H01M 2/10, H01M 2/12

(54) **Battery module**
Batteriemodul
Module de batterie

(30) Priority: 07.03.2012 US 201261607907 P; 04.02.2013 US 201313759002
(43) Date of publication of application: 11.09.2013
(73) Proprietor: Samsung SDI Co., Ltd., Yongin-si, Gyeonggi-do (KR); ROBERT BOSCH GMBH, 70442 Stuttgart (DE)
(72) Inventor: LIM, Young-Bin, Gyeonggi-do (KR)
(74) Representative: Mounteney, Simon James

(56) References cited:
- EP-A1- 2 381 507
- JP-A- 2003 100 274
- JP-A- 2010 277 736

## Description

### BACKGROUND

### 1. Field of the Invention

The present invention relates to a battery module, and more particularly to a battery module capable of improving a sealing of a vent.

### Description of the Related Art

Recently, a high output battery module has been developed by using a non-aqueous electrolyte having a high energy density. The high output battery module is formed by connecting a plurality of battery cells in series to drive a motor of a device, such as an electric vehicle and the like, in which high power consumption is necessary.

A battery cell includes an electrode assembly composed of a positive plate, a negative plate and an electrolyte, which generates energy by the electrochemical reaction of the pole plates with the electrolyte. In this case, gas may be generated within the battery cell due to a side-reaction of the electrochemical reaction. EP2381507, JP2010277736 and JP2003100274 disclose battery modules.

### SUMMARY OF THE INVENTION

An object of the present invention is to provide a battery module capable of preventing a gas leak generated from a battery cell under degassing by forming a pressurizing member between a cover covering a vent and a gasket.

Another object of the present invention is to provide a battery module capable of independently sealing each vent in each battery cell by forming a double protrusion along a circumference of a first opening member facing the vent.

The battery module according to the present invention includes a plurality of battery cells with the top of each cell having a vent, said battery cells being arranged linearly;
an insulating member positioned to correspond to the vents in the battery cells and comprises first openings positioned to correspond to the vents on each battery cell and a protrusion or protrusions facing said vents;
a pressurizing member positioned on top of the insulating member; and
a cover,
where the cover covers the vents of the battery cells, the insulating member and the pressurizing member such that the pressurizing member is positioned between the cover and the insulating member,
the cover has a hexahedral shape with a predetermined space at an inner portion thereof, wherein one surface of the cover is opened and the opened surface is seated on top of the battery cells and is directed towards the vents;
the predetermined space within the cover is provided with at least one rib formed along a longitudinal direction of the cover; and the at least one rib comprises:
a pair of first rib formations formed to correspond to the first pressurizing portion and
a pair of second rib formations formed to correspond to the second pressurizing portions.

When used herein, the insulating member may include first openings at areas corresponding to the vents and double protrusions may be formed along the circumferences of the first openings of the insulating member facing the vents.

In addition, the pressurizing member includes second openings at areas corresponding to the first openings.

Furthermore, the pressurizing member may include a first pressurizing portion for pressurizing the insulating member and the battery cell along a center portion in a longitudinal direction, second pressurizing portions formed to step from a first pressurizing member along both ends of the first pressurizing member for pressurizing the battery cell and connecting elements for connecting the first and second pressurizing portions.

In addition, each of the second pressurizing portions are formed with at least one fixing protrusion vertically bent toward the cover and the cover is formed with a fixing groove corresponding to each fixing protrusion.

Moreover, pressurizing protrusion may be formed along the circumference of the second openings of the pressurizing member facing the insulating member. That is, the pressurizing protrusions are formed at an area corresponding to the double protrusions of the insulating member.

In addition, the cover has a hexahedral shape, where one side is opened and which has a predetermined space at an inner portion thereof and the opened surface of the cover may be seated on the top of the battery cells so that it is directed towards the vents.

Moreover, the predetermined space within the cover is provided with at least one rib formed along a longitudinal direction of the cover.

The rib includes a pair of first rib formations formed to correspond to the first pressurizing member and second rib formations formed to correspond to the second pressurizing member.

The first rib formations are formed to correspond to a double protrusion of the insulating member.

In this case, preferably, the height of the first rib formations is shorter than that of the second rib formations.

Preferred features are set out in Claims 2 to 12.

### BRIEF DESCRIPTION OF THE DRAWINGS

FIG. 1 is a perspective view showing a battery module according to a first embodiment of the present invention.
FIG. 2 is an exploded perspective view showing a battery module according to a first embodiment of the present invention.
FIG. 3 is a rear perspective view of a cover, a pressurizing member and a gasket according to a first embodiment of the present invention.
FIG. 4 is a cross-sectional view taken along line A-A' of FIG. 1.
FIG. 5 is a cross-sectional view taken along line B-B' of FIG. 3.
FIG. 6 is an exploded perspective view showing a battery module according to a second embodiment of the present invention.
FIG. 7 is a vertical perspective view showing a top of a battery module according to a second embodiment of the present invention.

### DETAILED DESCRIPTION OF THE INVENTION

In the following detailed description, only certain embodiments of the present invention have been shown and described, simply by way of illustration.

An embodiment of the present disclosure will be described with reference to accompanying drawings in detail.

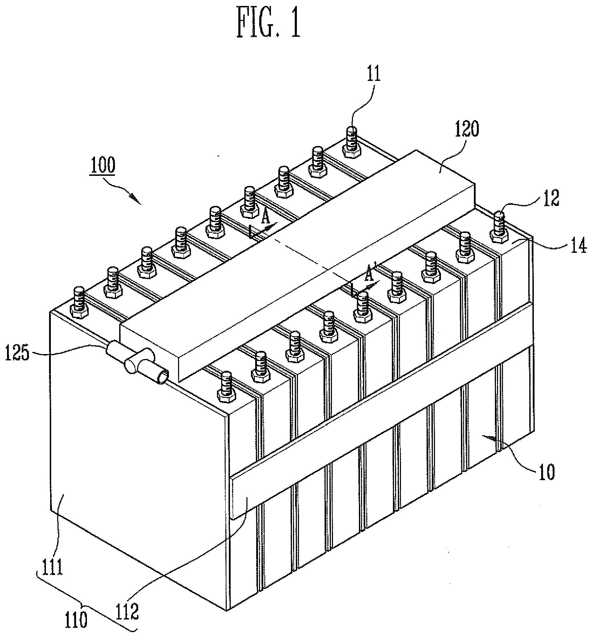

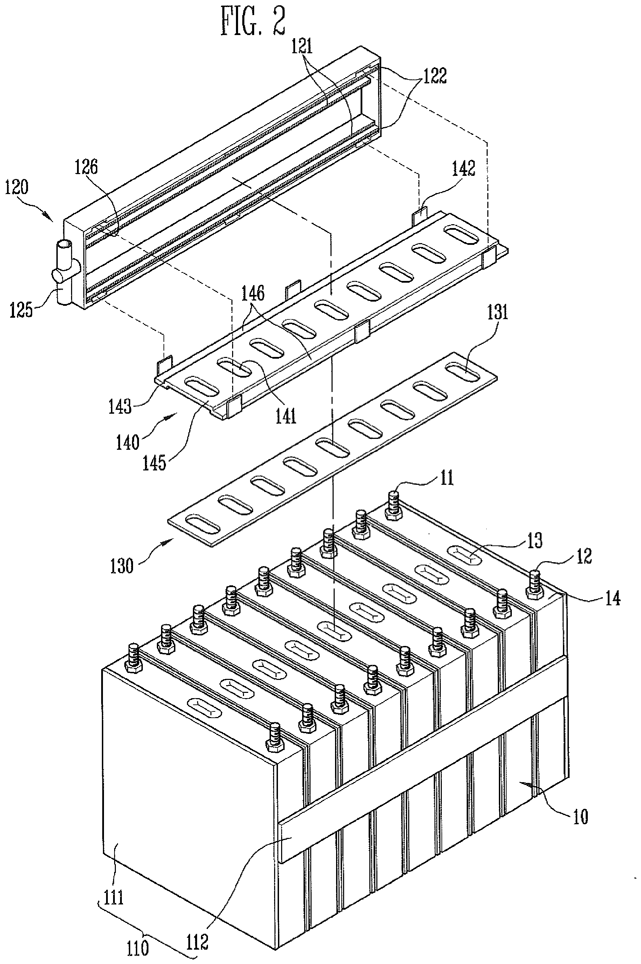

FIG. 1 is a perspective view showing a battery module according to a first embodiment of the present invention and FIG. 2 is an exploded perspective view showing a battery module according to a first embodiment of the present invention.

Referring to FIG.1 and 2, a battery module according to the present invention includes a plurality of battery cells 10, each having a vent 13 capable of discharging gas, an insulating member 130 formed at a position corresponding to the vents 13 of the battery cells 10 and a cover 120 covering the vents 13 and the insulating member 130. In addition, a pressurizing member 140 is included between the cover 120 and the insulating member 130.

The cover 120 has a hexahedral shape, where one side thereof is opened and the inside thereof has a predetermined space. The opened surface of the cover 120 is directed towards the vents 13, so as to be seated on the top of the battery cell 10. Therefore, the space within the cover 120 may form a flow path capable of moving gas discharged from a vent 13 of a battery cell during degassing.

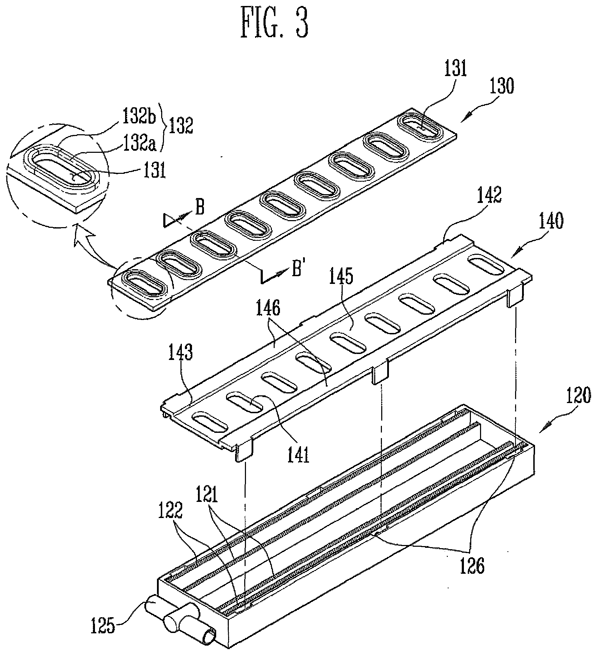

In addition, the insulating member 130 is made of an elastic material such as silicon and includes a first opening 131 at position corresponding to the vent 13. Such an insulating member 130 is preferably integrally formed to cover all of the vents 13 and a double protrusion may be formed along a circumference of the first openings 131 of a surface facing the vent 13 (see 132 in FIG.3).

Such an insulating member 130 may be made of a heat-resistant material, as the battery cell 10 generates heat in process of charging.

In this case, the plurality of battery cells 10 emit heat and can melt the insulating member 130 attached to the battery cell 10. When the insulating member is melted, gas leaks result due to a reduction of the sealing capacity between the insulating member 130 and the cover 120. Therefore, the insulating member 130 is made of a heat-resistant material to prevent a gas leak.

In addition, the pressurizing member 140 placed on the top of the insulating member 130 includes second openings 141 at an area corresponding to the first openings 131 in the insulating member. Such a pressurizing member 140 includes a first pressurizing portion 145 along a center portion in a longitudinal direction thereof, second pressurizing portions 146 formed to step from the first pressurizing portion 145 along both ends of the first pressurizing portion 145 and connecting elements 143 connecting the first pressurizing portion 145 and second pressurizing portion 146.

Here, the first pressurizing portion 145 is placed above the insulating member 130 and the top of the battery cell 10 and the second pressurizing portions 146 are placed above the top of the battery cell where the insulating member is not formed. Therefore, a space surrounded by the first pressurizing portion 145, the connecting elements 143 and the vents 13 are formed by the step between the first pressurizing portion 145 and the second pressurizing portion 146, and the insulating member 130 may be placed in the space.

In addition, an end of each second pressurizing portion is formed with at least one fixing protrusion bent vertically toward the cover 120. When there is more than one fixing protrusion, the fixing protrusions are placed at a predetermined intervals. In addition, a fixing groove 126 is formed in the cover 120 corresponding to each of the at least one fixing protrusions 142. The pressurizing member 140 is firmly fixed and the insulating member 130 placed below the pressurizing member 140 can be more strongly pressurized by inserting the fixing protrusion 142 into the fixing groove 126. This improves a sealing of the gas flowing path formed within the cover 120.

In addition, the cover 120 is seated on the top of the battery cell 10 so that an opened surface thereof is directed towards the vents 13 and a least one rib 121 and 122 is formed in the inner space of the cover 120 along a longitudinal direction. Such a rib 121 and 122 includes a pair of first rib formations 121 formed at a position corresponding to the first pressurizing portion 145 of the pressurizing portion 140 and a pair of second rib formations 122 are formed at a position corresponding to the second pressurizing portions 146 of the pressurizing member 140. In this case, since the first pressurizing portion 145 and second pressurizing portions 146 have a step, the height of the first rib formations 121 is shorter than that of the second rib formations 122.

One end of the cover is formed with a gas discharging port 125 connected to the outside. On degassing in a battery cell 10, gas is discharged through the vent 13, moves through the cover 120 and is discharged out of the gas discharging port 125. In this case, the gas discharging port 125 is formed in T-shape. Since the left side and the right side of the T-shaped discharging port is open, the gas does not have a effect on an adjacent battery module 100. However, a type of the gas discharge port is not limited to the ones described herein.

Next, a battery cell and a housing will be briefly described.

The battery cell 10 includes an electrode case and a cap plate 14 sealing an open area (i.e. the top of the electrode case). The electrode case houses an electrode assembly having positive plate, a negative plate, a separator interposed between these pole plates and an electrolyte. A positive terminal 11 is connected to the positive plate and a negative terminal 12 connected to the negative plate, which are formed at opposite ends of the cap plate 14. Said terminals 11, 12 protrude through the cap plate to the outside.

The positive plate and the negative plate of the electrode assembly react with the electrolyte to generate energy. The energy is transferred through the positive terminal 11 and the negative terminal 12 to the outside.

In addition, if gas generated inside the battery cell 10 results in a pressure above a predetermined value, the vent 13 provided between the positive terminal 11 and the negative terminal 12 of the cap plate 14 serves as a path for gas to be discharged from the battery cell 10. Therefore, the vent 13 prevents the battery cell 10 from being damaged by internal pressure. The gas can be generated as byproduct of the reaction between the pole plates and the electrolyte as the battery cell 10 is charged and such a gas is discharged through the vent 13.

An external case of the battery cell 10 is made of metal and the cover 120 is made of plastic resin. In this case, since the battery cell 10 and the cover 120 are made of heterogeneous materials, when the cells 10 and the cover 120 contact each other, they do not form a good seal and a gas leak may occur in a vulnerable area (i.e. the cells and the cover do not form a good contact). In order to prevent this, it is preferable that the insulating member 130 is provided between a battery pack 10 and the cover 120 and that an air tight seal is kept between the battery cell 10 and the cover 120 by the insulating member 130.

In addition, the housing 110 includes a pair of end plates 111 provided at both ends of a plurality of battery cells 10, side brackets 112 connecting the sides of the end plates 111 and a bottom bracket (not shown) connecting the bottom of the end plates 111.

Here, the pair of end plates 111 is formed to contact the surface of the outermost battery cells 10 to inwardly pressurize the plurality of battery cells 10.

In addition, the side brackets 112 are connected to each of the end plates 111 to support both sides of the plurality of battery cells. Further, the bottom of the battery cell 10 is supported by the bottom bracket. As described above, the plurality of battery cells 10 are housed in a housing 110 composed of the pair end plates 111, the side brackets 112 and the bottom bracket.

FIG.3 is a rear perspective view of a cover, a pressurizing member and an insulating member (i.e. a gasket) according to a first embodiment of the present invention.

Referring to FIG. 3, an insulating member 130 is formed above the vents (see 13 in FIG.2) of the top of a battery cell (see 10 in FIG. 2) according to the first embodiment of the present invention.

The pressurizing member 140 is formed above the insulating member 130 and the cover 120 is formed above the insulating member 130 and the pressurizing member 140. The cover 120 is formed in a hexahedral shape having a predetermined space, which one side thereof is opened. The opened surface of the cover 120 faces towards the vents 13. As will be appreciated, in the reverse perspective view of Figure 3, the pressurizing member 140 is below the insulating member 130 and the cover 120 is below the pressurizing member 140.

Herein, the insulating member 130 includes first openings 131 at areas corresponding to the vent 13s and double protrusions 132 are formed along a circumference of the first openings 131 in the insulating member 130 facing the vent 13. Each double protrusion 132 includes a first protrusion 132a formed along the circumference of the first opening 131 and a second protrusion 132b formed along the circumference of the first protrusion 132a. The first protrusion 132a and the second protrusion 132b are closely contact each other when in a non-pressurized state and the gap therebetween becomes wider under pressurization. The first protrusion 132a and the second protrusion 132b are formed integrally with the insulating member 130 and are made of the same material as the insulating member 130 (i.e. of the same silicon).

In addition, the pressurizing member 140 includes second openings 141 at an area corresponding to the first openings 131.

Such a pressurizing member 140 forms a pressurizing portion 145 along a center portion in a longitudinal direction and second pressurizing portions 146 formed to step with the first pressurizing portion 145 along both ends of the pressurizing portion 145. The first pressurizing portion 145 and the second pressurizing portion 146 are connected by connection elements 143. In this case, a space surrounded by the first pressurizing portion 145 and the connecting elements 143 is formed by stepping the first pressurizing portion 145 and the second pressurizing portions 146. The insulating member 130 can be received in the space.

In addition, the cover 120 receives the insulating member 130 and the pressurizing member 140, and the space within the cover 120 is utilized as a flow path though which gas discharged from a vent 13 moves during degassing.

In addition, a least one rib 121 and 122 is formed within the space of the cover 120 along the longitudinal direction of the cover 120. The rib 121 and 122 includes a pair of first rib formations formed at position corresponding to the first pressurizing portion 145 of the pressurizing member 140 and a pair of a rib 122 formations formed at a position corresponding to the second pressurizing portions 146 of the pressurizing member 140.

Here, since the first pressurizing portion 145 and the second pressurizing portions 146 of the pressurizing member 140 is formed to step, the height of the first rib formations 121 pressurizing the first pressurizing portion 145 is shorter than that of the second rib formations 122 pressurizing the second pressurizing portions 146. It is preferable that the pair of first rib formations formed at position corresponding to the first pressurizing portion 145 is formed to correspond to a double protrusion 132 of the insulating member 130.

Furthermore, each of the second pressurizing portions 146 of the pressurizing member 140 are formed with a least one fixing protrusion 142 vertically bent toward the cover 120 and the cover 120 is formed with a fixing groove 126 corresponding to the fixing protrusion 142. This enables the fixing protrusion 142 of the pressurizing member 140 to be inserted into the fixing groove 126 of the cover 120.

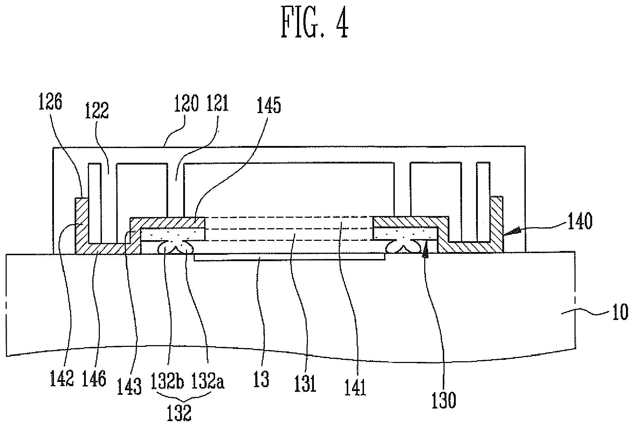

FIG. 4 is a cross-sectional view taken along line A-A' of FIG.1 and FIG.3 is a cross-sectional view taken along line B-B' of FIG.3.

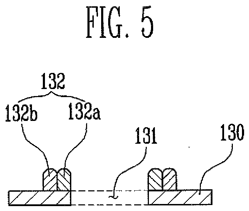

Referring to Figures 4 and 5, the insulating member 130 is formed at a position corresponding to a vent 13 of a battery cell 10.

Herein, the surface of the insulating member 130 in contact with the battery cell 10 is formed with double protrusions 132 along a circumference of the first openings 131. In addition, the pressurizing member 140 is formed on top of the insulating member 130. The pressurizing member 140 includes a first pressurizing portion 145 close to the top of the insulating member 130, second pressurizing portions 146 placed at both ends of the first pressurizing portion 145 and formed to step with the first pressurizing portion 145 to be close to the top of the battery cell 10 and connecting elements 143 connecting the first pressurizing portion 145 and the second pressurizing portions 146.

In addition, the insulating member 130 and the pressurizing member 140 are covered by a cover 120 having a predetermined space at an inner portion thereof. In this case, both the second pressurizing portions 146 of the pressurizing member 140 are formed with a least one fixing protrusion 142 vertically bent toward the cover 120. The fixing protrusion 142 is inserted into the fixing groove 126 formed in the cover 120 and the pressurizing member 140 pressurizes the insulating member 130 through tge cover 120 pressurizing the pressurizing member 140. Therefore, the double protrusions of the insulating member 130 becomes wider toward both sides thereof to more easily seal the vents 13.

In addition to this, the top of the inside of the cover 120 facing the pressurizing member 140 is formed with at least one rib 121 and 122 along a longitudinal direction of the cover 120. Herein, a pair of first rib formations 121 at a position corresponding to the first pressurizing portion 145 can pressurize the pressurizing member 140 and the insulating member 130, and the battery cell 10. Herein, a pair of second rib formations 122 at a position corresponding to the second pressurizing member 146 can pressurize the pressurizing member 140 and the battery cell 10. In this case, the first rib formations 121 are formed to correspond to the double protrusions 132 of the insulating member 130 to apply a larger pressure onto the double protrusions 132.

Pressure is applied to the pressurizing member 140 by the first rib formations 121 and the second rib formations 122 formed in an inner side of the cover and pressure is also applied to the insulating member 130 through the pressurizing member 140. Therefore, a portion of the area of the insulating member 130 not corresponding to the first rib formations 121 and the second rib formations 122 also can be pressurized close to the top of the battery cell 10.

The first protrusion 132a and the second protrusion 132b are close to each other when pressure is not applied, whereas they become wider when pressure is applied to the first protrusion 132a and the second protrusion 132b, they separate in opposite directions to each other. This enables the top of the battery cell 10 and the insulating member 130 to be close together (i.e. to form a better seal). Therefore, gas discharged from the vents under degassing will be discharged through the first openings 131. In addition, a gap does not occur between the insulating member 130 and the pressurizing member 140 because the pressurizing member 140 is pressurized by the cover 120. Therefore, gas discharged through the first openings 131 is also discharged through the second openings 141 into the inner space of the cover 120, that is, through the gas flow path to the outside of the cover.

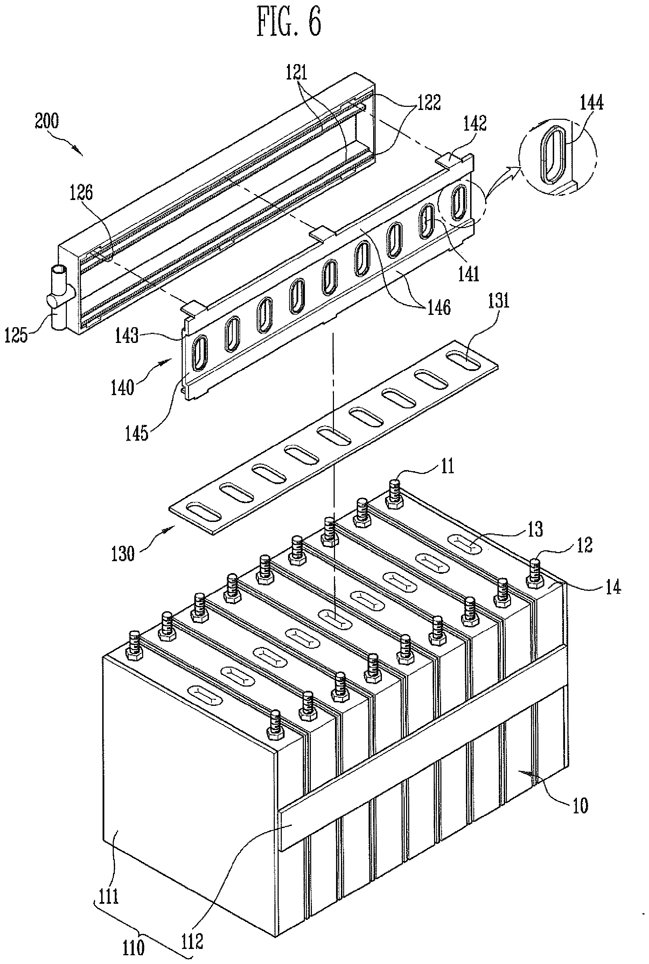

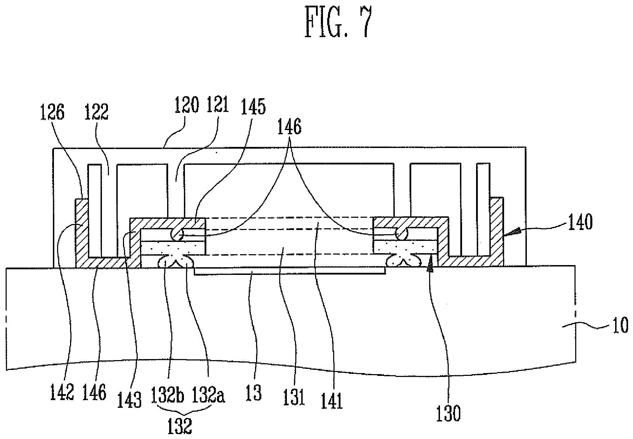

FIG.6 is exploded perspective view of a battery module according to a second embodiment of the present invention and FIG.7 is a vertical cross-sectional view of the top of the battery module according to a second embodiment of the present invention.

The battery module according to the second embodiment of the present invention is identical with that of the first embodiment expect for the pressurizing protrusion formed in the pressurized element. Therefore, a duplicate detailed description will be omitted.

Referring to FIG. 6 and 7, the battery module 200 according to a second embodiment of the present invention is arranged in one direction (i.e. a linear direction) and includes a plurality of battery cells 10 having vents 13 which discharge gas, an insulating member 130 is formed at position corresponding to the vents 13 of the battery cells 10 and a cover 120 covers the vents 13 and the insulating member 130. A pressurizing member 140 is further inserted between the cover 120 and the insulating member 130.

Herein, the insulating member 130 is formed with a double protrusion 132 along a circumference of the first openings 131 facing the vent 13.

In addition, the surface of the pressurizing member 140 facing the insulating member 130 is formed with pressurizing protrusions 144 along a circumference of the second openings 141. In this case, it is preferable that the pressurizing protrusions 144 are formed at a position corresponding to an area in which the double protrusions 132 are formed.

The pressure which the cover 10 applies to the battery cells 10 is transferred to the insulating member 130 through the pressurizing member 140, but the area in which the pressurizing protrusion 144 is formed is subjected to a higher pressure. That is, the area having the double protrusions 132 is exposed to a more intense pressure compared to the other areas of the insulating member by the pressurizing protrusions 144 formed to correspond to the double protrusions 132 in the insulating member 130. This enables the sealing capacity between the battery cell 10 and the insulating member 130 to improve, so that when a gas leaks out of the vents 13 in the battery cells 10 on degassing, gaps between the battery cells 10 and the insulating member 130 are prevented.

The present invention prevents a gas leak generated from a battery cell to the outside under a degassing by forming the pressurizing member between a cover covering a vent and the gasket (i.e. the insulation member) and improves the sealing of a space having a gas flow path (e.g. to the outside of the cover).

In addition, each vent is independently sealed by forming a double protrusion along a circumference of first openings in a gasket (i.e. the insulating members) facing the vent to prevent a gas from leaking into the outside.

As those skilled in the art would realize, the described embodiments may be modified in various different ways, all without departing from the scope of the claims.

## Claims

1. A battery module comprising:
a plurality of battery cells (10) with the top of each cell having a vent (13), said battery cells being arranged linearly;
an insulating member (130) positioned to correspond to the vents (13) in the battery cells (10) and comprises first openings (131) positioned to correspond to the vents (13) on each battery cell (10) and a protrusion or protrusions facing said vents (13);
a pressurizing member (140) positioned on top of the insulating member (130); and
a cover (120),
wherein the cover (120) covers the vents (13) of the battery cells (10), the insulating member (130) and the pressurizing member (140) such that the pressurizing member (140) is positioned between the cover (120) and the insulating member (130);
the cover (120) has a hexahedral shape with a predetermined space at an inner portion thereof, wherein one surface of the cover (120) is opened and the opened surface is seated on top of the battery cells (10) and is directed towards the vents (13);
the predetermined space within the cover (120) is provided with at least one rib (121, 122) formed along a longitudinal direction of the cover; and the at least one rib (121, 122) comprises:
a pair of first rib formations (121) formed to correspond to a first pressurizing portion (145) of the pressurizing member (140) and
a pair of second rib formations (122) formed to correspond to a second pressurizing portions (146) of the pressurizing member (140).

2. The battery module according to Claim 1, wherein the protrusion or protrusions are double protrusions (132) formed along the circumference of the first openings (131) facing the vents (13).

3. The battery module according to Claim 2 wherein each double protrusion (132) comprises a first protrusion (132a) formed along the circumference of the first opening (131) and a second protrusion (132b) formed along the circumference of the first protrusion (132a),
optionally wherein the first and second protrusions (132a, 132b) are integrally formed with the insulating member (130).

4. The battery module according to any one of Claims 1 to 3, wherein the pressurizing member (140) comprises second openings (141) positioned to correspond to the first openings (131) in the insulating member (130).

5. The battery module according to Claim 4 wherein at least one pressurizing protrusion (144) is formed in the surface of the first pressurizing portion (145).

6. The battery module according to Claim 5, wherein the pressurizing protrusion (144) is formed along a circumference of the second openings (141) of the pressurizing member (140) that face the insulation member (130).

7. The battery module according to Claim 6, wherein the pressurizing protrusions (144) are formed at an area corresponding to the double protrusions (132) in the insulating member (130).

8. The battery module according to any one of Claims 1 to 7, wherein the pressurizing member (140) comprises:
the first pressurizing portion (145) that pressurizes the insulating member (130) and the central portion of the battery cells in a longitudinal direction; and
the second pressurizing portions (146) formed as steps from the first pressurizing portion (145) to pressurize the battery cell connecting element.

9. The battery module according to any one of Claims 1 to 8, wherein the pressurizing member (140) is formed with at least one fixing portion (142) vertically bent toward the cover (120) and the cover is formed with a fixing groove (126) corresponding to the fixing portion (142).

10. The battery module according to any of Claims 1 to 9, wherein the first rib formations are formed to correspond to the double protrusions (132) in the insulating member (130).

11. The battery module according to any of Claims 1 to 10, wherein the first rib formations (121) are shorter in height than the second rib formations (122).

12. The battery module according to any one of Claims 1 to 11, wherein the cover (120) further comprises a gas discharging port (125) in one end of the cover, optionally wherein the gas discharging port (125) is fluidly connected to the predetermined space within the cover (120), according to any one of Claims 1 to 11, to generate a gas flow path from the vents (13) in the battery cells to the outside of the cover (120).

## Patentansprüche

1. Batteriemodul, das Folgendes umfasst:
eine Vielzahl von Batteriezellen (10), wobei die Oberseite jeder Zelle eine Entlüftung (13) aufweist, wobei die Batteriezellen linear angeordnet sind;
ein Isolierelement (130), das positioniert ist, um den Entlüftungen (13) in den Batteriezellen (10) zu entsprechen, und das erste Öffnungen (131) umfasst, die positioniert sind, um den Entlüftungen (13) auf jeder Batteriezelle (10) zu entsprechen, sowie einen Vorsprung oder Vorsprünge, die den Entlüftungen (13) zugewandt sind;
ein Druckbeaufschlagungselement (140), das auf dem Isolierelement (130) positioniert ist; und
eine Abdeckung (120);
wobei die Abdeckung (120) die Entlüftungen (13) der Batteriezellen (10), das Isolierelement (130) und das Druckbeaufschlagungselement (140) derart abdeckt, dass das Druckbeaufschlagungselement (140) zwischen der Abdeckung (120) und dem Isolierelement (130) positioniert ist;
die Abdeckung (120) eine hexaedrische Form mit einem vorbestimmten Raum an einem Innenabschnitt davon aufweist, wobei eine Fläche der Abdeckung (120) geöffnet ist und die geöffnete Fläche auf den Batteriezellen (10) sitzt und zu den Entlüftungen (13) hin gerichtet ist;
der vorbestimmte Raum in der Abdeckung (120) mit mindestens einer Rippe (121, 122) versehen ist, die entlang einer Längsrichtung der Abdeckung gebildet ist; und wobei die mindestens eine Rippe (121, 122) Folgendes umfasst:
ein Paar erster Rippenformationen (121), die gebildet sind, um einem ersten Druckbeaufschlagungsabschnitt (145) des Druckbeaufschlagungselements (140) zu entsprechen, und
ein Paar zweiter Rippenformationen (122), die gebildet sind, um einem zweiten Druckbeaufschlagungsabschnitten (146) des Druckbeaufschlagungselements (140) zu entsprechen.

2. Batteriemodul nach Anspruch 1, wobei der Vorsprung oder die Vorsprünge doppelte Vorsprünge (132) sind, die entlang dem Umfang der ersten Öffnungen (131) gebildet sind, die den Entlüftungen (13) zugewandt sind.

3. Batteriemodul nach Anspruch 2, wobei jeder doppelte Vorsprung (132) einen ersten Vorsprung (132a) umfasst, der entlang des Umfangs der ersten Öffnung (131) gebildet ist, und einen zweiten Vorsprung (132b), der entlang des Umfangs des ersten Vorsprungs (132a) gebildet ist,
wobei gegebenenfalls der erste und der zweite Vorsprung (132a, 132b) mit dem Isolierelement (130) integral gebildet sind.

4. Batteriemodul nach einem der Ansprüche 1 bis 3, wobei das Druckbeaufschlagungselement (140) zweite Öffnungen (141) umfasst, die positioniert sind, um den ersten Öffnungen (131) im Isolierelement (130) zu entsprechen.

5. Batteriemodul nach Anspruch 4, wobei mindestens ein Druckbeaufschlagungsvorsprung (144) in der Fläche des ersten Druckbeaufschlagungsabschnitts (145) gebildet ist.

6. Batteriemodul nach Anspruch 5, wobei der Druckbeaufschlagungsvorsprung (144) entlang eines Umfangs der zweiten Öffnungen (141) des Druckbeaufschlagungselements (140) gebildet ist, die dem Isolierelement (130) zugewandt sind.

7. Batteriemodul nach Anspruch 6, wobei die Druckbeaufschlagungsvorsprünge (144) in einem Bereich gebildet sind, der den doppelten Vorsprüngen (132) im Isolierelement (130) entspricht.

8. Batteriemodul nach einem der Ansprüche 1 bis 7, wobei das Druckbeaufschlagungselement (140) Folgendes umfasst:
den ersten Druckbeaufschlagungsabschnitt (145), der das Isolierelement (130) und den mittleren Abschnitt der Batteriezellen in eine Längsrichtung mit Druck beaufschlagt; und
die zweiten Druckbeaufschlagungsabschnitte (146), die als Stufen vom ersten Druckbeaufschlagungsabschnitt (145) gebildet sind, um die Batteriezellenverbindungskomponente mit Druck zu beaufschlagen.

9. Batteriemodul nach einem der Ansprüche 1 bis 8, wobei das Druckbeaufschlagungselement (140) mit mindestens einem Befestigungsabschnitt (142) gebildet ist, der vertikal zur Abdeckung (120) hin gebogen ist, und die Abdeckung mit einer Befestigungsnut (126) gebildet ist, die dem Befestigungsabschnitt (142) entspricht.

10. Batteriemodul nach einem der Ansprüche 1 bis 9, wobei die ersten Rippenformationen gebildet sind, um den doppelten Vorsprüngen (132) im Isolierelement (130) zu entsprechen.

11. Batteriemodul nach einem der Ansprüche 1 bis 10, wobei die ersten Rippenformationen (121) in der Höhe kürzer sind als die zweiten Rippenformationen (122).

12. Batteriemodul nach einem der Ansprüche 1 bis 11, wobei die Abdeckung (120) ferner einen Entgasungsanschluss (125) in einem Ende der Abdeckung umfasst, wobei der Entgasungsanschluss (125) wahlweise mit dem vorbestimmten Raum in der Abdeckung (120) fluidisch verbunden ist, nach einem der Ansprüche 1 bis 11, um einen Gasströmungspfad von den Entlüftungen (13) in den Batteriezellen zur Außenseite der Abdeckung (120) zu erzeugen.

## Revendications

1. Module de batterie comprenant :
une pluralité d'éléments de batterie (10) avec le dessus de chaque élément qui a un évent (13), lesdits éléments de batterie étant agencés de manière linéaire ;
un élément isolant (130) positionné pour correspondre aux évents (13) dans les éléments de batterie (10) et comprend des premières ouvertures (131) positionnées pour correspondre aux évents (13) sur chaque élément de batterie (10) et une saillie ou des saillies faisant face auxdits évents (13) ;
un élément de mise sous pression (140) positionné sur le dessus de l'élément isolant (130) ; et
un couvercle (120),
dans lequel le couvercle (120) recouvre les évents (13) des éléments de batterie (10), l'élément isolant (130) et l'élément de mise sous pression (140) de sorte que l'élément de mise sous pression (140) est positionné entre le couvercle (120) et l'élément isolant (130) ;
le couvercle (120) a une forme hexaédrique avec un espace prédéterminé au niveau de sa partie interne, dans lequel une surface du couvercle (120) est ouverte et la surface ouverte est installée sur le dessus des éléments de batterie (10) et est dirigée vers les évents (13) ;
l'espace prédéterminé à l'intérieur du couvercle (120) est prévu avec au moins une nervure (121, 122) formée le long d'une direction longitudinale du couvercle ; et la au moins une nervure (121, 122) comprend :
une paire de premières formations de nervure (121) formées pour correspondre à une première partie de mise sous pression (145) de l'élément de mise sous pression (140), et
une paire de secondes formations de nervure (122) formées pour correspondre à une seconde partie de mise sous pression (146) de l'élément de mise sous pression (140).

2. Module de batterie selon la revendication 1, dans lequel la saillie ou les saillies sont des saillies doubles (132) formées le long de la circonférence des premières ouvertures (131) faisant face aux évents (13).

3. Module de batterie selon la revendication 2, dans lequel chaque double saillie (132) comprend une première saillie (132a) formée le long de la circonférence de la première ouverture (131) et une seconde saillie (132b) formée le long de la circonférence de la première saillie (132a),
facultativement, dans lequel les première et seconde saillies (132a, 132b) sont formées de manière solidaire avec l'élément isolant (130).

4. Module de batterie selon l'une quelconque des revendications 1 à 3, dans lequel l'élément de mise sous pression (140) comprend des secondes ouvertures (141) positionnées pour correspondre aux premières ouvertures (131) dans l'élément isolant (130).

5. Module de batterie selon la revendication 4, dans lequel au moins une saillie de mise sous pression (144) est formée dans la surface de la première partie de mise sous pression (145).

6. Module de batterie selon la revendication 5, dans lequel la saillie de mise sous pression (144) est formée le long d'une circonférence des secondes ouvertures (141) de l'élément de mise sous pression (140) qui font face à l'élément isolant (130).

7. Module de batterie selon la revendication 6, dans lequel les saillies de mise sous pression (144) sont formées au niveau d'une zone correspondant aux doubles saillies (132) dans l'élément isolant (130).

8. Module de batterie selon l'une quelconque des revendications 1 à 7, dans lequel l'élément de mise sous pression (140) comprend :
la première partie de mise sous pression (145) qui met sous pression l'élément isolant (130) et la partie centrale des éléments de batterie dans une direction longitudinale ; et
les secondes parties de mise sous pression (146) qui sont formées comme des gradins à partir de la première partie de mise sous pression (145) pour mettre sous pression l'élément de raccordement d'élément de batterie.

9. Module de batterie selon l'une quelconque des revendications 1 à 8, dans lequel l'élément de mise sous pression (140) est formé avec au moins un élément de fixation (142) plié verticalement vers le couvercle (120) et le couvercle est formé avec une rainure de fixation (126) correspondant à la partie de fixation (142).

10. Module de batterie selon l'une quelconque des revendications 1 à 9, dans lequel les premières formations de nervure sont formées pour correspondre aux doubles saillies (132) dans l'élément isolant (130).

11. Module de batterie selon l'une quelconque des revendications 1 à 10, dans lequel les premières formations de nervure (121) sont plus courtes en hauteur que les secondes formations de nervure (122).

12. Module de batterie selon l'une quelconque des revendications 1 à 11, dans lequel le couvercle (120) comprend en outre un orifice de décharge de gaz (125) dans une extrémité du couvercle, facultativement dans lequel l'orifice de décharge de gaz (125) est raccordé de manière fluidique à l'espace prédéterminé à l'intérieur du couvercle (120), selon l'une quelconque des revendications 1 à 11, afin de générer une trajectoire d'écoulement de gaz à partir des évents (13) dans les éléments de batterie jusqu'à l'extérieur du couvercle (120).
